# DEMANDE DE BREVET EUROPEEN

(11) **EP 3 336 961 A1**
(43) Date de publication de la demande: **20.06.2018**
(21) Numéro de dépôt: 16306715.0
(22) Date de dépôt: 16.12.2016
(51) Int. Cl.: H01M 12/06, H01M 8/04089, G06K 19/077, H01M 10/42, H01M 12/08

(54) **PROCEDE DE FABRICATION D'UN OBJET ELECTRONIQUE COMPRENANT UN CORPS ET UNE BATTERIE A MEMBRANE POREUSE**

(71) Demandeur: GEMALTO SA, 92190 Meudon (FR)
(72) Inventeur: FIDALGO, Jean-Christophe, 13881 GEMENOS Cedex (FR); DUBOIS, Béatrice, 13881 GEMENOS Cedex (FR); ROBLES, Laurence, 13881 GEMENOS Cedex (FR)

(57) **Abrégé**

L'invention concerne un procédé de fabrication d'un objet portable (8) à puce électronique comprenant un corps (1) et une batterie du type métal-air intégrée dans le corps, ladite batterie comprenant une couche d'électrolyte (2e) et une membrane de protection (3m) poreuse à l'air recouvrant l'électrolyte.

Le procédé est caractérisé en ce qu'il une étape de formation d'au moins un conduit d'alimentation en air s'étendant de la membrane de protection (3m) jusqu'à une source d'air, une matière (3a, 3c, 3f) poreuse à l'air étant contenue dans ledit conduit et obturant complétement ledit conduit sur son parcours au moins par endroit de son parcours.

L'invention concerne également l'objet correspondant au procédé

## Description

### Domaine de l'invention.

L'invention concerne un procédé de fabrication d'un objet portable à puce électronique comprenant un corps et une batterie intégrée dans le corps.

Plus particulièrement, l'invention concerne l'intégration dans un objet portable d'une batterie comprenant une couche d'électrolyte recouverte d'une membrane de protection poreuse à l'air (ou autre gaz). La batterie est de préférence du type métal-air. Elle peut également concerner d'autres batteries telles que les batteries à combustible.

Les objets portables concernés par l'invention peuvent comprendre notamment les cartes à puce, les passeports, des téléphones mobiles, des étiquettes RFID, des dispositifs communicants du type M2M, des objets à porter tels que des montres, des bracelets, des ceintures, ou tout objet portable ayant un autre facteur de forme que celui ci-dessus.

### Art antérieur

Les objets portables à batterie notamment les cartes à puce actives nécessitent de plus en plus d'énergie pour inclure de nouvelles fonctions (ou composants) comprenant un afficheur, de nouveaux capteurs (empreinte, interfaces sans-contact, amplificateur, capteur, booster, générateur de calcul cryptographique, générateur de numéro à usage unique (OTP)).

Il existe des batteries de type Li-ion mais leur capacité limitée présente l'inconvénient de raccourcir la durée de vie de l'objet portable et des applications qui y sont intégrées.

On connait de nouvelles batteries du type métal-air comme Li-air dont la capacité potentielle est très prometteuses puisqu'elle peut atteindre environ 10 fois celle des batteries de type Li-Ion, mais ces dernières ont besoin d'être alimentée en oxygène. Ces batteries peuvent utiliser un électrolyte ou une construction telles que décrites dans les demandes de brevet français non publiées relatives respectivement à un électrolyte liquides hydrocarboné (FR 1558851) et une batterie métal/oxygène (FR 1558852) de la société LITEN.

Les inventeurs ont constaté que ces piles sont proches du fonctionnement des piles à combustible et envisagent leur intégration dans les objets portables.

On connait les cartes à puce à afficheur qui comprennent des batteries fines nécessairement placées au coeur des couches plastiques formant le corps de carte à puce. Les batteries sont par exemple noyées totalement (ou enrobées de résine ou de couches plastiques étanches) notamment pour des problèmes de fiabilité et de visuel de la carte sur sa durée de vie.

### Objectif / Problème technique.

La présente invention vise à résoudre les problèmes évoqués ci-dessus.

Plus précisément, la présente invention décrit des solutions de structure et/ou de fabrication pour intégrer de telles nouvelles batteries dans des objets portables et cela à échelle industrielle.

En particulier, les inventeurs ont remarqué que les batteries ci-dessus ne peuvent pas être intégrées dans les objets portables de la même manière que les batteries fines actuelles pour carte à puce. Les inventeurs ont remarqué que ces batteries qu'ils convoitent pour leurs objets portables hôtes exigent une mise à l'air de la batterie pour permettre à l'oxygène de l'atteindre.

### Résumé de l'invention.

L'invention a d'abord pour objet un procédé de fabrication d'un objet portable à puce électronique comprenant un corps et une batterie du type métal-air intégrée dans le corps, ladite batterie comprenant une électrode positive métal, une couche d'électrolyte et une ou plusieurs membranes de protection poreuse à l'air recouvrant l'électrolyte. Le procédé est caractérisé en ce qu'il comporte au moins un conduit d'alimentation (ou une alimentation) en air s'étendant de la membrane jusqu'à une source d'air, et une matière poreuse à l'air placée dans ledit conduit et obturant complétement ledit conduit sur son parcours au moins par endroit. Ainsi, il est possible d'alimenter correctement la batterie en oxygène pour lui permettre de fonctionner.

De préférence, la matière poreuse ou perméable à l'oxygène est également imperméable à l'eau.

Dans certains cas, le conduit est formé par une seconde matière poreuse à l'air distincte d'une première membrane poreuse constituée par l'une des membranes de la batterie. La seconde matière poreuse peut être de même nature que la matière d'une des membranes de la batterie.

Selon d'autres caractéristiques :
- Le corps comprend une cavité débouchant en surface et un module à puce est placé dans la cavité, ladite batterie étant placée sous le module, le conduit étant ménagé dans un espace situé entre une paroi de la cavité et une surface périphérique du module (notamment autour de la batterie ou de la puce avec ou sans sa résine d'enrobage, si le module comporte une puce) ;
- Le module comporte un film support poreux à l'air et/ou des métallisations ajoutées ;
- Le conduit peut s'étendre à travers le module, jusqu'au module ou jusqu'aux plages de contact du module ;
- Le conduit comprend une couche de matière poreuse s'étendant parallèlement à une des surfaces principales du corps ;
- Le conduit comprend une couche de matière poreuse s'étendant perpendiculairement à une surface principale du corps ;
- Le conduit est sous forme de cylindre, d'anneau, de plaque, de capillaires ;
- La matière poreuse comprend une extrémité ou une zone placée contre la membrane de la batterie ;
- La matière poreuse est choisi parmi un tissu imperméable et respirant à base de poly tétrafluoroéthylène, fibre de verre recouvert de poly tetrafluoroéthylène, ou de Papier polymère, ou encore un feuille de PC, PVC, PET, Epoxy... micro perforée localement ou totalement.
- Le matériau peut être hybride ; Il peut comporter une partie flexible et une partie plus rigide constituée (ou comprenant) de céramique poreuse ou conductrice ionique en zircone ou en silicium poreux ou encore en un matériau perméable à l'oxygène comme une membrane de type silicone ou zéolite.

L'invention concerne également un objet portable correspondant au procédé.

Selon d'autres caractéristiques :
- Le matériau poreux est hydrophobe ou imperméable à l'eau.
- Le matériau poreux se présente sous forme d'une couche s'étendant sensiblement sur toute la surface de la carte à l'intérieur ou en surface.
- Le matériau est perméable à du gaz (en particulier à l'oxygène).

### Brève description des figures.

- La figure 1 illustre une vue de dessus d'un objet électronique sous forme de carte à puce selon un premier mode de réalisation de l'invention ;
- la figure 2 illustre une vue en coupe de la figure précédente ;
- La figure 3 illustre une vue de dessus d'un objet électronique sous forme de carte à puce selon un second mode de réalisation de l'invention;
- La figure 4 illustre une vue en coupe de la figure précédente ;
- La figure 5A illustre une vue de dessus d'un objet électronique sous forme de carte à puce selon un troisième mode de réalisation de l'invention;
- La figure 5B illustre différentes configurations de la matière poreuse ;
- La figure 6 illustre une vue en coupe de la figure 5A ;
- La figure 7 illustre une vue de dessus d'un objet électronique sous forme de carte à puce (ou autre) selon un quatrième mode préféré de réalisation de l'invention dans lequel, la batterie est insérée dans une cavité d'objet ;
- La figure 8 illustre une vue en coupe de la figure précédente ;
- La figure 9 illustre une vue en coupe d'un assemble du module selon le mode précédent ;
- La figure 10 illustre une vue de dessus du module de la figure précédente;
- La figure 11 illustre la batterie 2 de la figure précédente configurée pour une cavité ;
- La figure 12 illustre un film adhésif pour fixer le module ;
- LA figure 13 illustre le report du module dans la cavité.

### Description.

Dans les dessins, les mêmes références indiquent des éléments identiques ou similaires.

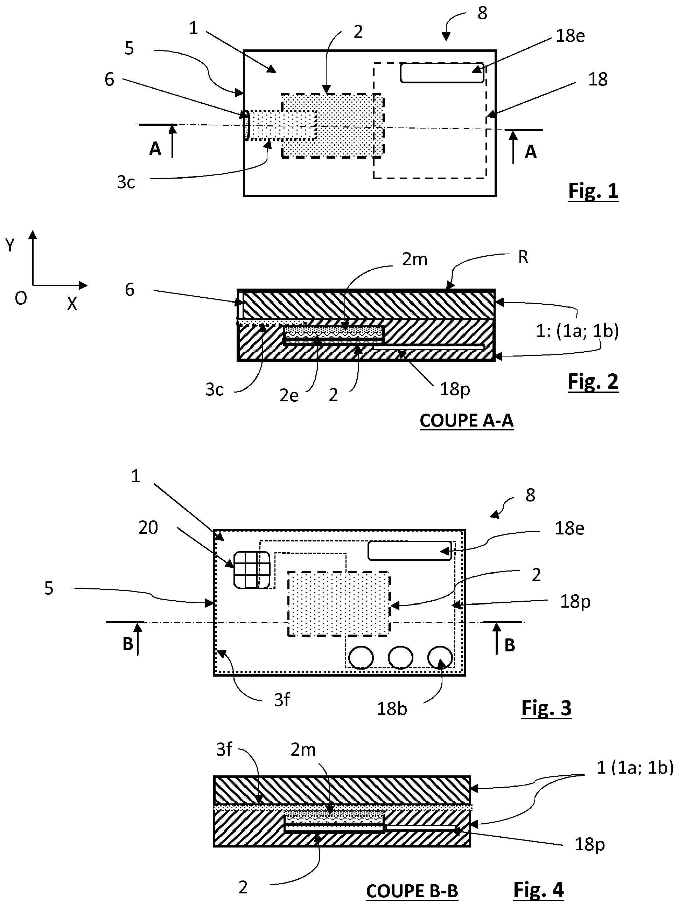

A la figure 1 est illustré un objet électronique 8 (sous forme de carte à puce) obtenu selon un premier mode de mise en oeuvre du procédé de fabrication l'invention.
L'objet portable 8 à puce électronique comprend un corps 1 et une batterie 2 du type métal-air intégrée dans le corps (Le corps peut être en PVC);
La batterie 2 comprend une couche d'électrolyte à l'intérieur avec deux électrodes et une membrane de protection poreuse à l'air recouvrant l'électrolyte et débouchant en surface ici sur une face principale. La batterie peut être par exemple obtenue selon l'une des demandes de brevet susvisée (FR 1558851) et (FR 1558852).

La batterie se présente sous forme d'une structure multicouche fine et plate avec une surface ici sensiblement rectangulaire pouvant représenter environ un quart ou un huitième de la surface d'une carte à puce standard au format ID1. Elle a de préférence environ 21 mm de long et 20 mm de large et environ 400 µm d'épaisseur. Elle permet de fournir une tension de 3V et une quantité d'énergie d'au moins 30 m A/h à 200 m A/h selon ses dimensions.

En général, une batterie métal-Air associe une électrode positive constituée d'un matériau Métallique (Zn, Al, Li...) et une électrode négative à air ou à oxygène. Un électrolyte ou plusieurs électrolytes permettent de dissoudre les ions métalliques ainsi que le transport des ions métalliques de l'électrode positive à l'électrode négative lors de la décharge et inverse s'il y a recharge possible. L'électrode négative est le lieu des réactions et formation de composés de type M-O₂/M₂-O_{2/}M₂-O... Plusieurs types d'électrolyte peuvent être utilisés (Aqueux, aprotique, solide, polymère...).

Suivant les électrolytes (par exemple aqueux), des membranes protègent la surface du métal afin d'exclure une réaction violente de celui-ci avec l'oxygène ou H2O. Le lieu de l'électrode négative est un matériau poreux de la plus grande surface spécifique possible afin à la fois de permettre la pénétration de l'oxygène ou de l'air ainsi qu'être le support physique des produits de réaction M-O₂/M₂-O₂/M₂-O. Les tensions électriques obtenues dans le cas d'une batterie LiO₂ sont de l'ordre de 3V.

Une batterie du type Li-Air peut aussi se trouver dans l'objet portable 8.

Plus particulièrement une batterie Li-Air est au croisement entre un accumulateur Lithium et une pile à combustible.

En général, le coeur d'une pile à combustible est constitué de trois éléments dont deux électrodes : une électrode positive (anode) oxydante (émettrice d'électrons), une électrode négative (cathode) réductrice (collectrice d'électrons) et un électrolyte séparant les électrodes. L'alimentation se fait par injection continue de combustible à l'anode, généralement de l'hydrogène, et à la cathode, généralement le dioxygène de l'air ou l'air lui-même. Une énergie électrique continue est alors disponible aux bornes de la pile. L'hydrogène peut être stocké dans un matériau poreux hydrogéné comme le silicium poreux (WO2004091026A2/ FR2858313A1)) ou comme proposé par la société FEMTO-ST.

La batterie 2 est logée sensiblement au coeur de la carte à puce notamment au niveau de la fibre neutre.

Le corps 1 de carte est ici obtenu par lamination à froid par superposition d'une feuille de plastique de base 1a présentant un rebord périphérique ou cadre plastique à l'intérieur duquel est placé la batterie et le cas échéant un circuit électronique flexible auquel est connecté la batterie.

Le procédé peut donc comprendre un positionnement dans le cadre plastique, de l'ensemble du circuit électrique / électronique formé de la batterie et du circuit électronique (pouvant comprendre tout composant généralement utilisé dans l'industrie de la carte à puce.

Le circuit peut comprendre un écran afficheur 18e, un clavier ou des boutons 18b, un circuit imprimé flexible 18p) ; Il peut comprendre une antenne radiofréquence, un quartz, une horloge, un microprocesseur ou microcontrôleur à puce électronique ou autre composant, un générateur OTP, un générateur cryptographique, une ou des mémoires de masse, un capteur d'empreinte, une photodiode... (non représentés).

La batterie peut être connectée de manière classique à l'un des éléments électroniques / électriques susvisés.

Après le positionnement, une résine thermoplastique est versée sur l'ensemble et une feuille de couverture 1b est placée par-dessus avant de subir une lamination (ou pressage) à chaud ou à froid de l'ensemble structurel de l'objet ainsi formé (avec les feuilles) pour avoir l'épaisseur voulue notamment de 0,76 mm.

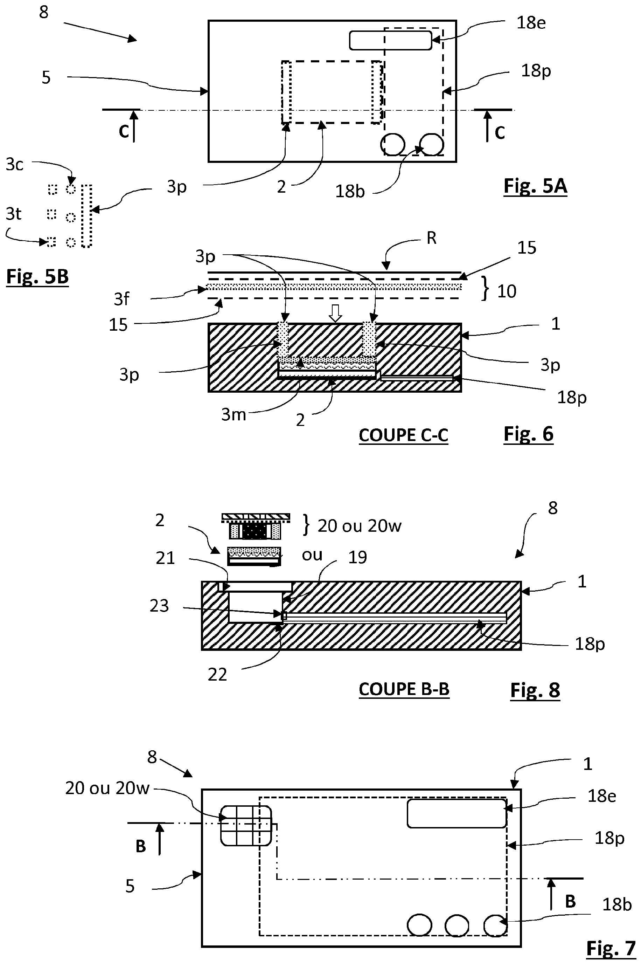

Alternativement (figure 6), le corps 1 peut être obtenu par injection de matière autour de l'ensemble électrique / électronique ci-dessus après que ce dernier soit placé dans un moule ou autres formes correspondantes aux dimensions du corps de carte.

La carte 8 peut comprendre un module 20 à puce de type carte à puce à contacts électriques (ou métallisations) 25 ou sans-contact.

Selon une caractéristique du premier mode l'objet comporte une étape de formation d'au moins un conduit d'alimentation en air ou oxygène) s'étendant de la membrane 3m jusqu'à une source d'air. En l'occurrence, la source d'air est à l'extérieur du corps. Elle est constituée par l'air atmosphérique environnant.
Une matière 3c poreuse à l'air étant placée dans ledit conduit et obturant complétement ledit conduit sur son parcours au moins par endroit de manière à éviter une entrée d'eau.

Alternativement, l'échancrure est une perforation, notamment cylindrique, débouchant sur une des surfaces du corps perpendiculairement à la surface principale, ou perpendiculairement à une surface de la tranche 5. Ceci de manière à placer un bouchon hermétique à l'air de manière à obturer l'alimentation en air et préserver la batterie. Ce bouchon peut être un système repositionnable ou non, collant et de la forme de la cavité, ou souple et couvrant la cavité.

Selon l'exemple, la batterie est placée dans le corps de carte de manière à avoir la membrane poreuse 3m de recouvrement (au moins partiel) de l'électrolyte orientée vers le côté supérieur de la carte (ou du corps) (visible au premier plan sur la figure 1) ou pour la figure 2 dans la direction Y selon le repère O, X, Y.

Pour la mise oeuvre, le procédé peut comprendre une étape consistant à placer une couche 3f (ou au moins un cordon 3c d'une matière poreuse à l'air contre au moins une portion de la surface externe de la membrane poreuse de recouvrement 2m de la batterie 2.

La matière poreuse peut être placée avant formation du corps notamment avant de placer une résine adhésive sur l'ensemble électrique / électronique et la feuille de recouvrement.

La matière poreuse 3c, 3f est placée de manière à s'étendre jusqu'à une surface externe du corps située ici sur une tranche latérale 5 du corps.

Après lamination, la structure 8 comprend ou définit un conduit obtenu par surmoulage de la matière poreuse par de la résine et/ou la feuille plastique de recouvrement 1b du corps 1. La porosité de la matière est telle que la résine ne pénètre pas dans la matière poreuse (ou très peu superficiellement) même sous effet de la pression de lamination.

La matière poreuse à l'air est donc ainsi placée dans ledit conduit formé par surmoulage ou usinage et obture complétement le conduit sur tout son parcours ou en grande majorité. Alternativement, la matière poreuse peut être placée à une des extrémités du conduit notamment à l'embouchure).

Après lamination, le corps peut être découpé au format final de la carte de manière à avoir une tranche nette. La matière poreuse qui peut dépasser de la périphérie finale de la carte peut être également découpée.

Le corps comporte ici fig. 1 de la matière poreuse 3c qui débouche sur la tranche 5 de la carte. De manière optionnelle, le procédé peut comprendre la formation d'un ou plusieurs puits s'étendant de la matière poreuse jusqu'à une surface externe de la carte.

Dans l'exemple, le procédé prévoit un usinage (perçage) d'un puit 6 (ou une échancrure) en bordure latérale du corps de carte sur la moitié de son épaisseur jusqu'à atteindre la matière 3c poreuse à l'air. Ainsi, grâce à l'échancrure 6, la matière poreuse 3c débouche donc aussi bien du côté de la surface principale supérieure que sur la tranche 5 du bord latéral de la carte. L'axe du perçage de l'échancrure peut être sensiblement centré sur la limite ou bord périphérique de la carte. La largeur de l'échancrure peut être par exemple de 100µm, 500µm 1 mm, 2 ou 3 mm. Une série de petits perçages inférieurs à 1mm peuvent aussi être réalisés perpendiculairement à la surface de la carte et créer un passage de l'air vers le matériau poreux.

Ces perçages (trous) peuvent comprendre un élément d'obturation (bouchon) perméable ou poreux à l'air (ou autre gaz). Cet élément perméable à l'air peut ne pas être perméable à l'eau.

Pour empêcher ou limiter la réaction de la batterie, ces tous peuvent être obturés par des bouchons ou des membranes (élément d'obturation complément imperméable à l'air (ou gaz). Tel une membrane polymère ou caoutchouc (ou élastomère) adhésive amovible et/ou repositionnable.

Le corps peut recevoir une feuille de décoration R ou de finition (illustrée uniquement sur la fig. 2) et couvrant l'échancrure (ou encoche) 6.

Alternativement, le procédé peut prévoir de former une poche d'air au-dessus d'au moins une portion de la membrane de recouvrement de la batterie. Par exemple, une capsule ou un chapeau plastique est posé sur la membrane avant distribution de résine adhésive dessus et autour de la capsule.

Ensuite, après lamination de la feuille de recouvrement 1b, le procédé peut prévoir de ménager un conduit par usinage du corps à partir de la surface externe du corps jusqu'à atteindre la poche d'air.

Le perçage peut être latéral parallèlement au plan de la carte à partie de la tranche 5 de la carte ou il peut être perpendiculairement à la surface principale du corps de carte.

Le conduit ainsi formé peut être rempli au moins partiellement d'une matière poreuse à l'air. De préférence, uniquement une portion proche de la surface externe de la carte est remplie de matière poreuse. Cette matière forme ainsi un opercule ou une paroi poreuse notamment cylindrique de faible épaisseur (ex. 2 - 5 mm).

Aux figures 5A, 5B et 6, selon une troisième variante de mise en oeuvre ou de réalisation, le corps 1 comprend deux portions de matériau (ou matière) poreux 3p réparties au niveau de deux extrémités latérales opposées de la batterie. La matière s'étend sur toute la largeur de la batterie. La matière a ici une forme de plaque ou de bloc parallélépipède. Alternativement, la forme peut être quelconque notamment sous forme de bâton cylindrique 3c, ou de tige de section carrée.

Pour la réalisation, le procédé peut utiliser deux poches d'air ou capsules creuses rectangulaires disposées 3p sur la surface de la membrane poreuse de la batterie notamment à deux extrémités latérales opposées. Le procédé opère sensiblement comme précédemment par un recouvrement de résine puis d'une feuille de recouvrement 1b avant lamination et pressage. Alternativement, le corps 1 peut être entièrement moulé. Les éléments 3C, 3t ou 3p étant positionné contre la membrane comme des noyaux autour desquels s'écoule la résine de moulage.

Le procédé prévoit de mettre à jour les capsules par usinage à partir de la surface externe du corps de carte. Ensuite, le procédé prévoit comme précédemment de remplir les cavités ainsi dégagées par de la matière poreuse aux dimensions correspondants à celles des cavités. La matière poreuse peut être fixée par collage sur les parois verticales de la cavité.

Optionnellement, le procédé peut prévoir de laminer une feuille de recouvrement poreuse 3f (identique ou similaire à celle de la figure 3) sur toute la surface de la carte. Un adhésif 15 (ayant de préférence des ouvertures en regard des éléments 3p, 3c, 3p) peut être placé sur toute la surface à l'exception des poches d'air (ou zones rectangles 3p) remplies de matière poreuse. Dans l'exemple, l'adhésif est une grille de thermofusible notamment en polyuréthane. Ainsi, les sections de matériau poreux ne sont pas obturées par la feuille adhésive et permettent une arrivée d'air via la feuille 3f.

La carte peut comporter une feuille ou film de décoration R finale ou de protection. Elle peut comporter un adhésif ajouré ou non comme le film 15 pour fixer la feuille externe sur la couche poreuse 3f.

Ainsi, la structure permet une amenée d'air par l'intermédiaire de l'épaisseur de la feuille de matière poreuse 3f débouchant au moins sur des tranches 5 (ou bord) de la carte. Cet air collecté sur la tranche peut parvenir jusqu'aux deux zones (ou puits) rectangulaires 3p, 3c, 3t et alimenter la batterie.

De manière générale à tous les modes de réalisation, le procédé peut prévoir une telle grille 15 (ou équivalent tel que stries, cordons adhésif, quadrillage) au-dessus et/ou au-dessous d'une couche 3f. La grille peut être placée notamment entre la membrane 3m (ou les deux surfaces de la batterie) et une feuille (1a) placée au-dessus de manière à éviter une délamination (par absence de liaison) si la surface de la membrane est trop importante.

Alternativement, la couche 3f peut être ajourée sur toute sa surface pour permettre une adhésion notamment entre les couches 1a et 1b.

Les figures 3 et 4 illustrent un mode de réalisation proche du premier dans lequel le cordon 3c est remplacé par une couche de matière poreuse 3f couvrant au moins une partie mais de préférence toute la surface externe de la membrane 3m de la batterie 2. La feuille 3f s'étend de préférence jusqu'à un des bords latéraux de la carte. Ici, la feuille s'étend jusqu'à tous les bords du corps.

Le procédé peut prévoir des étapes similaires ou identiques à celles décrites en relation avec le premier mode à la différence du facteur de forme du cordon 3c par rapport à une couche 3f couvrant de préférence toute la membrane.

Les figures 7 et 8 illustrent un mode de réalisation préféré du procédé comprenant une étape de formation d'une cavité 19, 21 débouchant en surface d'un corps d'objet. Ici, il s'agit d'un corps de carte à puce comme dans les précédents exemples. La batterie peut par exemple déboucher dans la cavité ou être placée dans la cavité 21, 22 par une opération d'encartage.

Dans ce quatrième mode de réalisation, la cavité 19, 21 reçoit un module électronique (module à contacts électriques avec ou pas de puce de circuit intégré, sans-contact ou hybride, afficheur quelconque notamment de montre ou d'objet connecté, clavier, capteur ou autre circuit 20w...).

La périphérie de ce module à circuit 20, 20w est sensiblement inférieure à celle de la périphérie de la cavité 19, 21, 31 de manière à ménager un espace périphérique d'amené (ou d'alimentation) d'air s'étendant de l'extérieur du corps de carte (au niveau du module) jusqu'à la membrane de la batterie placée ou débouchant dans la cavité.

Alternativement, l'amené d'air peut passer à travers le module ou du moins les plages de contact ou un film support ajouré supportant notamment des plages de contact électrique ou une antenne.

Ici, le corps comprend un circuit imprimé 18p avec des composants (non représentés). Le circuit 18p comprend des pistes ou plages d'interconnexion (22 au fond de la cavité et 23 sur la paroi perpendiculaire à celle du fond).

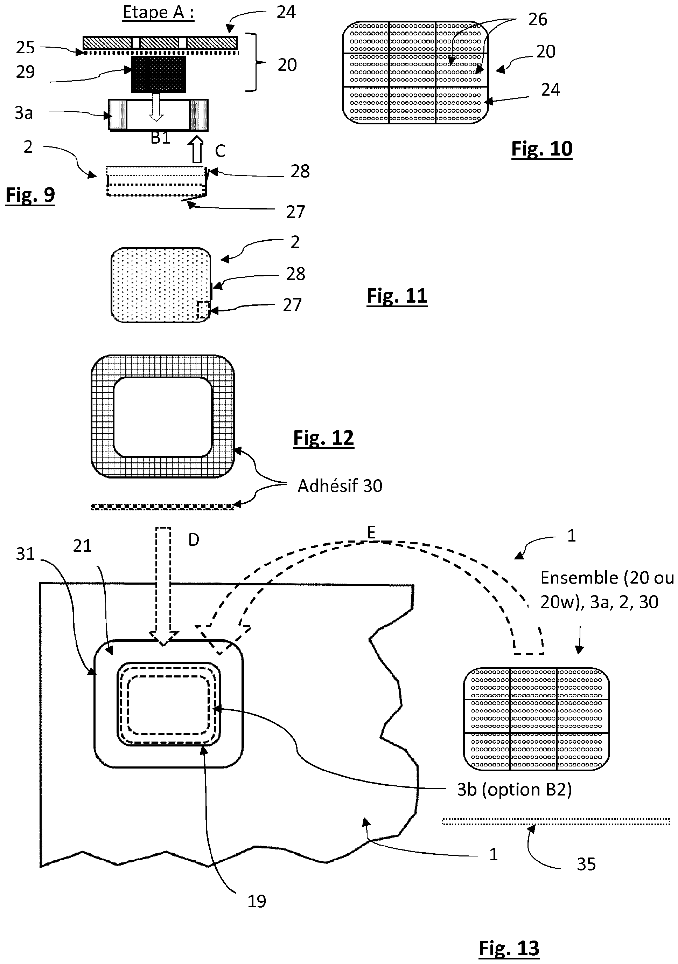

La batterie comprend des plages ou piste d'interconnexion 28, 28 correspondantes respectivement 27 sous la batterie et 28 sur un chant latéral de la batterie) (fig. 7 et 11)

Puis, cet espace (entre module et paroi de cavité) peut être rempli de matière poreuse 3a de préférence jusqu'à la surface du corps de carte ou jusqu'au module.

Alternativement, la matière poreuse est sous forme de bague ou anneau 3a et peut être placée autour de la résine du module ou placé dans la cavité telle que d'écrit ultérieurement.

Le procédé peut prévoir de déposer dans la cavité, d'abord la batterie dont la surface est sensiblement du même ordre de grandeur que celle du module (par exemple, 10 X 15 mm2 ou 8 X 20 mm2 ou 10 x 25 mm2). Le procédé peut ensuite prévoir de placer le module 20 prévu sur la membrane. L'air peut être apporté en périphérie du module 20 grâce à un espace périphérique comblé de matière poreuse 3C à l'air. La périphérie peut être constituée en partie par celle de l'enrobage 29 de la puce de circuit intégré à l'intérieur du module.

Le cas, échéant, la puce électronique du module peut être montée retournée (flip-chip) de manière à gagner en épaisseur.
L'invention peut prévoir une épaisseur de module de 150 µm et une épaisseur de batterie de 400 µm. Dans ce cas, l'anneau 3a, peut être placé auteur de la puce montée en flip chip et avec pas ou peu de matière 29 d'enrobage.
Le cas, échéant, la puce électronique du module peut être montée retournée (flip-chip) de manière à gagner en épaisseur.

Le cas échéant, la puce électronique peut être déportée dans un circuit 18p placé dans le corps de l'objet pour gagner en épaisseur.

Le procédé peut prévoir de connecter le circuit électronique / électrique 18p à la batterie 2 en plaçant des plages d'interconnexion de la batterie 27, 28 en regard de celles du circuit 22, 23 lors du report dans la cavité de l'un et/ou de l'autre. La connexion peut être effectuée à l'aide de matière conductrice électrique adhésive notamment anisotropique (liquide ou solide : ACF / ACP) ou simplement par contact électrique ou pâte de soudure électrique.

La capacité importante de la batterie permet de réduire sa surface ou encombrement au point de pouvoir la loger dans le corps de carte par une opération d'encartage comme un module de carte à puce via la cavité d'un module électronique / électrique.

Alternativement, le module 20 peut comporter des plages d'interconnexion s'étendant de la puce jusque sous la résine 26 notamment à travers la résine 26. De même la batterie peut avoir des plages d'interconnexion s'étendant notamment au-dessus de la membrane 3m de manière à être situées en regard des plages d'interconnexion du module et permettre une connexion lors de la l'assemblage.
Alternativement, les plages de contact 25 du module peuvent être remplacées par une antenne radiofréquence pour avoir une communication sans contact plutôt qu'à contacts électriques.

Alternativement, le film isolant 25 ajouré peut supporter en dessous et/ou au-dessus une antenne radiofréquence notamment spiralée pour une communication radiofréquence.

Le procédé peut prévoir de reporter la batterie via une cavité débouchant en surface d'un corps d'objet de manière que celle-ci vienne connecter un circuit électronique imprimé 18p préalablement introduit au coeur de la carte (ou autre circuit). La connexion à un circuit électronique imprimé contenu dans l'objet peut s'effectuer par de la matière conductrice adhésive ou de la pâte de soudure comme susvisée.
Les plages d'interconnexion peuvent avoir été révélées par usinage de la cavité.

Le procédé peut prévoir de combler la cavité par de la matière poreuse jusqu'à la surface de l'objet de manière à permettre une alimentation en air de la batterie.

Le procédé peut prévoir de recouvrir l'objet 8 par une feuille poreuse 3f ou par une feuille comprenant des porosités ou des micros perforations localisées au-dessus de la cavité contenant la batterie ou en regard de puit(s) parvenant jusqu'à la membrane poreuse de la batterie.

L'invention peut prévoir tout matériau poreux, à l'air ou oxygène ou conducteur ionique d'oxygène ou ayant une perméabilité à l'oxygène. De préférence, le matériau n'est pas poreux à l'eau ou l'humidité. Il est imperméable à l'eau. Il peut être présenté sous forme de feutre, de fibres, de tissu (ou toile) tissé ou non tissé, de couche de fibre. Il peut comprendre par exemple du tissu de la marque Gore-Tex™. Il peut être à base de poly tétrafluorethylene (téflon), de tissu ayant subi un traitement imperméabilisant mais demeurant poreux à l'air ou encore un mélange fibre de verre et de poly tétrafluorethylène, de zéolite, un mélange de fibre nano de TiO2, des éléments constitués de ZrO2 stabilisée Y2O3, de Silicium poreux, de diméthylsilicone ou d'autre couche de type silicone.

Alternativement, si la batterie fonctionne à l'aide d'un gaz (combustible) différent de l'oxygène ou de l'air, le matériau

Bien que décrit en relation avec de l'air ou de l'oxygène, l'invention s'étend à d'autres type de batterie fonctionnant avec d'autres combustibles gazeux. Dans la description et revendications, les termes « air » ou « oxygène » peuvent être substitués par un autre combustible gazeux (ex. l'hydrogène) selon la nature ou type de batterie concernée. Cela s'applique également aux matériaux dont la porosité ou perméabilité est définie par rapport à un combustible gazeux.

Pour empêcher la compression de la stratification (lamination), des canaux, canules ou capillaires poreux peuvent être disposés perpendiculairement à la surface principale de l'objet. La batterie et conduire directement à la surface plane externe de l'objet. (Comme sur la figure 6)

Les figures 9 - 13 illustrent un mode de mise en oeuvre préféré du procédé de fabrication d'une carte à puce contenant la batterie métal air 2.

A la figure 9, le module à contact est réalisé avec des plages de contacts 24 (ou métallisations) ajourées avec des perforations 26 traversant complétement les métallisations 24. Ces perforations peuvent être localisées uniquement en regards des puits ou zones de matière poreuse 3a placées en dessous. Ainsi, la matière poreuse 3a est annulaire et se trouve placé à l'étape B1 autour de la résine d'enrobage 29 de la puce du module et de certaines de ses connexions électriques. La matière poreuse à une forme correspondante à la forme de la cavité qui le reçoit. Ici, elle a une section sensiblement rectangulaire.

Le module peut ou pas avoir un film support diélectrique 25. Les plages peuvent avoir été prédécoupées plutôt que gravées sur le film support 25.

Alternativement à l'étape B2 optionnelle, l'anneau est introduit dans la cavité avant le report du module, la batterie ayant été placée au préalable.

Ensuite à l'étape C, la batterie est fixée contre la partie centrale du module sur la résine notamment avec un point de colle. La batterie a sensiblement la même section que l'anneau poreux 3a.

Ensuite, on rappelle que le circuit 18p a pu déboucher dans la cavité par usinage de la cavité et dégagement des plages (ou bornes) d'interconnexions 22, 23.

Il est alors possible de placer de la matière électrique conductrice notamment anisotropique (ACF, ACP) entre les contacts d'interconnexions 22, 23 et 27, 28.
Le procédé prévoit également de placer un film adhésif 30 sur le plan 21 de la cavité haute 31 pour fixer le module au corps 1. Avantageusement, le film peut comprendre des rainures radiales du centre vers l'extérieur pour permettre une arrivée d'air à partir de l'espace correspondant au jeu entre le module et la cavité haute 31.

Alternativement, l'adhésif peut comporter des points de colle dimensionnés de manière à laisser subsister après pressage, un ou des espace(s) ou conduit(s) d'air adjacent(s) au plan 21 et sous le module. Notamment cet adhésif peut être un film adhésif qui peut être prédécoupé (poinçonné) en fonction de la taille (ou section) des canaux (ou des évidements) recherchés.

Ensuite, à l'étape E, le procédé prévoit de reporter avantageusement en une seule opération l'ensemble comportant, le module, la matière poreuse ou perméable et la batterie et d'effecteur en même temps la connexion de la batterie au circuit 18p.

L'invention s'applique à la fabrication d'objets électriques / électroniques comprenant une batterie insérée dans l'objet et ayant une amenée d'air s'étendant de la batterie jusqu'à une source d'air ou d'oxygène. Ainsi par exemple, grâce notamment au dernier mode de réalisation, il est possible d'insérer non seulement la batterie d'une durée de vie relativement durable mais aussi un circuit électronique, (afficheur, capteur empreinte, etc.) à partir de l'extérieur de l'objet. L'objet peut être une montre connectée, un bracelet avec transpondeur radiofréquence, un passeport, un téléphone mobile, un ordinateur, un module M2M autonome ou autre objet quelconque... .)

L'invention prévoit également un film d'obturation de conduit sur le module ou du moins sur les ouvertures d'air de manière à les obturer et ainsi augmenter la durée de vie de la batterie. Le film peut être adhésif de type repositionnable avec une languette de préhension.

Le cas échéant, l'invention peut prévoir des moyens d'obturation de l'alimentation en air ou en oxygène pour obturer le conduit à l'intérieur de l'objet. Ils peuvent comprendre un clapet notamment anti-retour actionnable de l'extérieur, notamment par un interrupteur mécanique ou micro électrique ou piézoélectrique.

## Revendications

1. Procédé de fabrication d'un objet portable (8) à puce électronique comprenant un corps (1) et une batterie du type métal-air intégrée dans le corps, ladite batterie comprenant une couche d'électrolyte (2e) et une membrane de protection (3m) poreuse à l'air recouvrant l'électrolyte, **caractérisé en ce qu'**il une étape de formation d'au moins un conduit d'alimentation en air s'étendant de la membrane de protection (3m) jusqu'à une source d'air, une matière (3a, 3c, 3f) poreuse à l'air ou perméable à l'oxygène étant contenue dans ledit conduit et obturant complétement ledit conduit sur son parcours au moins par endroit de son parcours.

2. Procédé selon la revendication précédente, **caractérisé en ce qu'**il comprend une étape de formation d'une cavité (19) dans ledit corps et débouchant en surface du corps et une étape de placement d'un module (20, 20w) à puce dans la cavité, ladite batterie étant placée sous le module et ledit conduit étant ménagé dans un espace situé entre une paroi de la cavité (19) et une surface périphérique (29) du module.

3. Procédé selon l'une des revendications précédentes, **caractérisé en ce que** ledit module comporte un film support (25) poreux à l'air ou perméable à l'oxygène et/ou des métallisations (24) ajoutées (26).

4. Procédé selon l'une des revendications précédentes, **caractérisé en ce que** ledit conduit (24, 26) s'étend à travers le module.

5. Procédé selon l'une des revendications précédentes, **caractérisé en ce que** le conduit comprend une couche (3f) de matière poreuse ou perméable à l'oxygène s'étendant parallèlement à une des surfaces principales du corps.

6. Procédé selon l'une des revendications précédentes, **caractérisé en ce que** le conduit comprend une couche (3p, 3c, 3t) de matière poreuse ou perméable à l'oxygène s'étendant perpendiculairement à une surface principale du corps.

7. Procédé selon l'une des revendications précédentes, **caractérisé en ce que** le conduit est sous forme de cylindre (3c), d'anneau (3a), de plaque (3p), de capillaires.

8. Procédé selon l'une des revendications précédentes, **caractérisé en ce que** la matière poreuse ou perméable à l'oxygène (3a, 3f) comprend une extrémité ou zone placée contre la membrane (3m) de la batterie.

9. Procédé selon l'une des revendications précédentes, **caractérisé en ce que** la matière poreuse ou perméable à l'oxygène est choisie parmi un tissu imperméable et respirant à base de poly tétrafluoroéthylène ou de papier polymère, de tissu ayant subi un traitement imperméabilisant à l'eau mais demeurant poreux à l'air.

10. Procédé selon l'une des revendications 1 à 8, **caractérisé en ce que** la matière poreuse ou perméable à l'oxygène est choisie parmi un mélange fibre de verre et de poly tetrafluorethylène, de zeolite, un mélange de fibres nano de TiO2, des éléments constitués de ZrO2 stabilisée Y2O3 ou CaO, de Silicium poreux, de diméthylsilicone ou d'autre couche de type silicone.

11. Objet portable (8) à puce électronique comprenant un corps (1) et une batterie du type métal-air intégrée dans le corps, ladite batterie comprenant une couche d'électrolyte (2e) et une membrane de protection (3m) poreuse à l'air recouvrant l'électrolyte, **caractérisé en ce qu'**il comprend au moins un conduit d'alimentation en air s'étendant de ladite membrane de protection (3m) jusqu'à une source d'air, une matière (3a, 3c, 3f) poreuse à l'air étant contenue dans ledit conduit et obturant complétement ledit conduit sur son parcours au moins par endroit de son parcours.

12. Objet portable (8) selon la revendication précédente **caractérisée en ce que** le matériau poreux ou perméable à l'oxygène est hydrophobe ou imperméable à l'eau.

13. Objet portable (8) selon l'une des revendications 10 et 11 **caractérisée en ce que** le matériau poreux ou perméable à l'oxygène se présente sous forme d'une couche (3f) s'étendant sensiblement sur toute la surface de la carte à l'intérieur ou en surface.

14. Objet portable (8) selon l'une des revendications 10 à 12, **caractérisée en ce qu'**il comprend un film d'obturation ou un bouchon à l'embouchure du conduit.
